# EUROPÄISCHE PATENTSCHRIFT

(11) **EP 3 555 567 B1**
(45) Veröffentlichungstag und Bekanntmachung des Hinweises auf die Patenterteilung: **28.10.2020**
(21) Anmeldenummer: 17811918.6
(22) Anmeldetag: 05.12.2017
(51) Int. Cl.: G01C 21/32

(54) **AKTUALISIERUNG EINER DIGITALEN KARTE**
UPDATE OF A DIGITAL MAP
MISE À JOUR D'UNE CARTE DIGITALE

(30) Priorität: 13.12.2016 DE 102016224845
(43) Veröffentlichungstag der Anmeldung: 23.10.2019
(73) Patentinhaber: Bayerische Motoren Werke Aktiengesellschaft, 80809 München (DE)
(72) Erfinder: LEISTNER, Dirk, 80807 München (DE); FLOSSBACH, Sascha, 85356 Freising (DE); RICHTER, Werner, 82008 Unterhaching (DE); SCHECHTER, Dimitri, 80992 München (DE)
(86) Internationale Anmeldenummer: PCT/EP2017/081521
(87) Internationale Veröffentlichungsnummer: WO 2018/108632

(56) Entgegenhaltungen:
- DE-A1- 10 318 179
- DE-A1-102015 203 929
- US-A1- 2012 078 493

## Beschreibung

Die vorliegende Erfindung betrifft ein Verfahren zur Aktualisierung einer digitalen Karte eines mobilen Navigationssystems, sowie ein mobiles Navigationssystem und ein Kraftfahrzeug mit einem solchen Navigationssystem.

Mit mobilen Navigationssystemen, die insbesondere als fester Bestandteil oder nachrüstbares Sonderzubehör von Kraftfahrzeugen beliebt sind, kann die aktuelle geografische Position bestimmt sowie eine Route zu einem Zielort berechnet werden. Für diese Berechnung verfügen Navigationssysteme über in einem Datenspeicher des Navigationssystems gespeicherte digitale Karten. Damit derartige digitale Karten stets auf einem möglichst aktuellen Stand sind, besteht das Bedürfnis, eine digitale Karte so häufig und so umfangreich wie möglich zu aktualisieren. Es ist bekannt, digitale Karten zu aktualisieren, indem ein Datenträger (z.B. eine CD, ein USB-Laufwerk o.Ä.) mit dem Navigationssystem verbunden wird, auf welchem aktualisierte Kartendaten gespeichert sind. Ein solcher Datenträger kann entweder in dem Navigationssystem verbleiben, also den bisherigen Datenträger der digitalen Karte ersetzen, oder sein Inhalt kann auf den im Navigationssystem befindlichen Datenträger der digitalen Karte kopiert werden.

Moderne Fahrzeuge weisen häufig Vorrichtungen zur drahtlosen Datenkommunikation mit fahrzeugexternen Kommunikationsteilnehmern auf. Beispielsweise können Fahrzeuge eingerichtet sein, über Mobilfunknetze Daten mit dem Internet auszutauschen. Derartige Datenkommunikationsvorrichtungen eröffnen eine weitere Möglichkeit zur Aktualisierung einer im Fahrzeug gespeicherten digitalen Karte, nämlich indem die aktualisierten Kartendaten über die Mobilfunkverbindung bezogen werden. Da in der Regel das Datenvolumen, welches über eine derartige Mobilfunkverbindung übertragen werden kann, aus technischen und wirtschaftlichen Gründen beschränkt ist, ist es problematisch, die gesamte digitale Karte über eine Mobilfunkverbindung zu aktualisieren.

Es ist daher wünschenswert, auf diesem Wege nur die tatsächlich benötigten Teile der digitalen Karte zu aktualisieren. Dazu ist es bekannt, die digitale Karte nach geografischen Regionen zu gliedern. Beispielsweise kann bei einer solchen Gliederung einer Karte Europas jedes europäische Land eine Region darstellen. Die Regionen können jedoch auch wesentlich kleinteiliger gewählt werden.

Wird das mobile Navigationssystem in den Bereich einer bestimmten Region bewegt, so können über die drahtlose Datenverbindung die Kartendaten dieser Region aktualisiert werden. Dies kann sowohl umfassen, dass die - zuvor im Navigationssystem nicht vorhandenen - Kartendaten der Region erstmals geladen werden, also auch, dass bereits vorhandene Kartendaten der Region mit aktuelleren Kartendaten der Region überschrieben werden. Nachteilig an diesem Vorgehen ist, dass der Aktualisierungsvorgang - abhängig von zu übertragendem Datenvolumen und Datenübertragungsrate - eine längere Zeit andauert, während derer die aktualisierten Kartendaten noch nicht zur Verfügung stehen.

DE 10 2015 203 929 A1 schlägt ein Verfahren zur Aktualisierung von Kartendaten vor, bei welchem die Kartendaten in Kartenkacheln unterteilt sind. Abhängig von einer Position des Fahrzeugs wird eine Aktualisierungsgrenze und eine Auslösegrenze bestimmt. Es wird geprüft, ob alle Kartenkacheln innerhalb der Aktualisierungsgrenze aktuell sind; ist dies nicht der Fall, so werden die Kartendaten aktualisiert. Dieses Verfahren wird erneut durchgeführt, wenn das Fahrzeug die Auslösegrenze erreicht.

In DE 103 18 179 A1 wird ein Bereich mit einer konstanten Entfernung oder weniger von der Grenze eines Einheitsgebiets als die Nähe der Grenze des Einheitsgebiets bezeichnet. Befindet sich die gemessene aktuelle Position in der Nähe der Grenze eines Einheitsgebiets, wird Karteninformation zur Routenbestimmungsergebnisbereitstellung über das nächste Gebiet, zu dem sich das Datenendgerät bewegen wird, bereitgestellt.

Ausgehend vom Stand der Technik stellt sich die Aufgabe, die Aktualisierung von Kartendaten im Hinblick auf die Verfügbarkeit aktueller Kartendaten einerseits und die Minimierung des zu übertragenden Datenvolumens (und damit auch die Vermeidung der Aktualisierung gar nicht benötigter Kartendaten) andererseits zu verbessern. Erfindungsgemäß wird ein Verfahren zur Aktualisierung einer digitalen Karte eines mobilen Navigationssystems vorgeschlagen. Dabei kann es sich insbesondere um ein Navigationssystem eines Kraftfahrzeugs handeln. Es kann sich jedoch beispielsweise auch um ein als eigenständiges Gerät gestaltetes Navigationssystem oder um ein Smartphone mit Navigationsfunktionalität handeln. Ein von der digitalen Karte umfasster geografischer Bereich ist in eine Mehrzahl von Regionen unterteilt, wobei jeweilige Kartendaten der digitalen Karte je eine der Regionen abbilden. Bei den Regionen kann es sich um beliebig gewählte geografische Bereiche handeln. Beispielsweise können Regionen durch Länder, Bezirke oder andere politische Grenzen gebildet sind. Ebenso können Größe und Gestalt der Regionen unabhängig von geografischen Gegebenheiten gewählt werden, beispielsweise als Planquadrate. Möglich, aber keineswegs notwendig ist es, dass unterschiedliche Regionen die gleiche Form und / oder Größe haben. Es kann sogar vorteilhaft sein, Gegenden mit einer hohen Dichte von Kartenobjekten (z.B. städtische Gebiete) in Regionen mit relativ kleiner Fläche und Gegenden mit einer geringen Dichte von Kartenobjekten (z.B. ländliche Gebiete) in Regionen mit relativ großer Fläche abzubilden.

Erfindungsgemäß weist zumindest eine der Regionen eine die Region unmittelbar umgebende erste Begrenzungslinie auf. Handelt es sich bei der ersten Begrenzungslinie um eine geschlossene Linie, so bildet der von der ersten Begrenzungslinie eingeschlossene Bereich die Region. Es sei angemerkt, dass die erste Begrenzungslinie nicht zwangsläufig eine geschlossene Linie sein muss, auch wenn dies vorteilhafterweise der Fall sein wird. Liegt beispielsweise eine Region am Rand eines von der digitalen Karte abgebildeten geografischen Bereichs, so kann sich die Begrenzung der Region auch implizit aus der Grenze des von der digitalen Karte abgebildeten geografischen Bereichs ergeben.

Erfindungsgemäß weist die Region mindestens eine weitere Begrenzungslinie auf, welche die Region wenigstens abschnittsweise mit größerem Abstand umgibt als die erste Begrenzungslinie. Die weitere Begrenzungslinie definiert mit anderen Worten ein Gebiet, welches größer ist als die Region, diese aber umfasst. Das überschüssige Gebiet kann auch als Pufferzone bezeichnet werden. Die Pufferzone umgibt die Region.

Das Verfahren sieht vor, dass in einem ersten Schritt eine geografische Position des Navigationssystems bestimmt wird. Dann wird geprüft, ob die Position des Navigationssystems auf oder innerhalb der weiteren Begrenzungslinie liegt. Mit anderen Worten wird geprüft, ob das Navigationssystem sich an oder innerhalb der Grenze zur Pufferzone befindet. Tritt diese erste Bedingung zu, werden die Kartendaten der Region aktualisiert. Dies geht auf bekannte Weise vonstatten. Beispielsweise können hierzu über eine Mobilfunkverbindung des Navigationssystems oder des Kraftfahrzeugs die Kartendaten von einem Datenserver, z.B. einem Internetserver, angefordert und anschließend empfangen werden. Es kann auch vorgesehen sein, dass über die Datenverbindung zunächst die jeweilige Versionsnummer der im Navigationssystem und / oder im Datenserver vorhandenen Kartendaten übermittelt wird, um festzustellen, ob eine Aktualisierung überhaupt notwendig ist.

Die Erfindung ermöglicht es also mit anderen Worten, dass die Kartendaten einer Region nicht erst dann angefordert und übertragen werden, wenn sich das Navigationssystem bereits in der Region befindet. Vielmehr wird die digitale Karte bereits dann aktualisiert, wenn die Grenze zu der Pufferzone überschritten wird. Es besteht dann nämlich eine hinreichende Wahrscheinlichkeit, dass das Navigationssystem sich auf dem Weg in die Region befindet. Eine Aktualisierung der Kartendaten der Region ist daher sinnvoll. Andererseits kann der Weg, den das Navigationssystem vor Erreichen der Region durch die Pufferzone noch zurückzulegen hat, genutzt werden, um die aktuellen Kartendaten zu übertragen.

Ausführungsformen der Erfindung können vorsehen, dass die weitere Begrenzungslinie eine in der digitalen Karte enthaltene vorbestimmte Information ist. Mit anderen Worten kann die weitere Begrenzungslinie eine statische Information sein, die beispielsweise vom Kartenhersteller oder dem Hersteller des Navigationssystems vorgegeben sein kann.

Alternative Ausführungsformen der Erfindung können mit Vorteil vorsehen, dass die weitere Begrenzungslinie von dem Navigationssystem bestimmbar ist. Mit besonderem Vorteil kann die Bestimmung der weiteren Begrenzungslinie in Abhängigkeit mindestens einer Eigenschaft der mobilen Datenverbindung, insbesondere der verfügbaren Datenrate, und / oder des Navigationssystems (und / oder des Kraftfahrzeugs) erfolgen. Die weitere Begrenzungslinie kann insbesondere so bestimmt werden, dass die Aktualisierung zum voraussichtlichen Zeitpunkt des Erreichens der ersten Begrenzungslinie der Region abgeschlossen ist. Zur Bestimmung dieses Zeitpunkts können berücksichtigt werden:
- das zu übertragende Datenvolumen,
- die verfügbare Datenrate und
- die verbleibende Zeit bis zum Erreichen der ersten Begrenzungslinie der Region, wobei diese verbleibende Zeit insbesondere aus einer verbleibenden Wegstrecke und einer voraussichtlichen und / oder bisherigen durchschnittlichen Geschwindigkeit errechnet werden kann.

Bei einer besonders vorteilhaften Ausgestaltung der Erfindung sind mindestens zwei weitere Begrenzungslinien vorgesehen. Dabei weist die Region eine zweite Begrenzungslinie auf, welche die Region wenigstens abschnittsweise mit größerem Abstand umgibt als die erste Begrenzungslinie. Zudem weist die Region eine dritte Begrenzungslinie auf, welche die Region wenigstens abschnittsweise mit größerem Abstand umgibt als die zweite Begrenzungslinie. Mit anderen Worten werden durch die zweite und dritte Begrenzungslinie zwei aneinander angrenzende Pufferzonen um die Region gebildet. Bei dieser Ausgestaltung wird in einem zusätzlichen Verfahrensschritt eine zweite Bedingung geprüft, ob eine Zielführung des Navigationssystems aktiv ist. Unter dem Begriff der Zielführung ist dabei diejenige Funktion des Navigationssystems zu verstehen, bei der ein Zielort eingestellt ist und eine Route dorthin bestimmt wurde oder wird.

Ist dies der Fall, so wird die erste Bedingung mit Bezug zu der dritten Begrenzungslinie geprüft. Mit anderen Worten wird also geprüft, ob die Position des Navigationssystems auf oder innerhalb der dritten Begrenzungslinie liegt.

Trifft die zweite Bedingung hingegen nicht zu, ist also die Zielführung des Navigationssystems nicht aktiv, so wird die erste Bedingung mit Bezug zu der zweiten Begrenzungslinie geprüft. Mit anderen Worten wird also geprüft, ob die Position des Navigationssystems auf oder innerhalb der zweiten Begrenzungslinie liegt.

Es wird also bei dieser Ausgestaltung unterschieden, ob das Navigationssystem gegenwärtig zur Zielführung genutzt wird. Ist dies der Fall, so wird die Aktualisierung schon früher gestartet, nämlich bereits bei Erreichen der dritten Begrenzungslinie (die ja weiter von der Region entfernt liegt als die zweite Begrenzungslinie). Da es bei aktivierter Zielführung wahrscheinlicher ist, dass das Navigationssystem tatsächlich in die Region hineinbewegt wird, kann die Aktualisierung früher gestartet werden, ohne dass die Wahrscheinlichkeit einer (mangels späteren Eintritts des Navigationssystems in die Region) unnötigen Aktualisierung stark erhöht wird. Andererseits wird dadurch, dass die Aktualisierung früher begonnen wird, die Wahrscheinlichkeit erhöht, dass die Aktualisierung bis zum Erreichen der ersten Begrenzungslinie der Region abgeschlossen ist.

Es sei explizit darauf hingewiesen, dass die Aktualisierung auch bei aktivierter Zielführung erst im Zeitpunkt des Erreichens der dritten Begrenzungslinie gestartet wird und nicht etwa bereits zu einem früheren Zeitpunkt. Dies gilt auch dann, wenn die geplante Route in der Pufferzone und / oder in der Region liegt. Es wird dadurch vermieden, dass die Kartendaten einer Region unnötig aktualisiert werden, falls beispielsweise der Nutzer des Navigationssystems (insbesondere der Fahrer des Kraftfahrzeugs) von der geplanten Route abweicht.

Bei einer besonders vorteilhaften Weiterbildung wird im Falle des Eintretens der zweiten Bedingung, falls also die Zielführung des Navigationssystems aktiv ist, eine dritte Bedingung geprüft, ob eine geplante Fahrtroute zumindest teilweise innerhalb der Region verläuft. Nur falls dies zutrifft, wird der Schritt des Aktualisierens der Kartendaten der Region ausgeführt, anderenfalls nicht.

Bei aktivierter Zielführung ist der voraussichtlich von dem Navigationssystem zukünftig zurückgelegte Streckenverlauf bekannt. Diese Kenntnis kann mit Vorteil dazu genutzt werden, die Aktualisierung der digitalen Karte nur dann durchzuführen, wenn dies auch nötig ist. Führt aber die geplante Fahrtroute zwar in die Pufferzone der Region, nicht jedoch in die Region selbst hinein, so müssen die Kartendaten der Region nicht aktualisiert werden.

Bei der zuletzt beschriebenen Ausführungsform wird mit anderen Worten bei aktivierter Zielführung bei Überschreiten der dritten Begrenzungslinie keine Aktualisierung vorgenommen, falls die geplante Fahrtroute nicht in die Region hineinführt. Es kann jedoch vorgesehen sein, dass die Kartendaten der Region dennoch aktualisiert werden, falls und sobald die Position des Navigationssystems auf oder innerhalb der zweiten Begrenzungslinie liegt. Mit anderen Worten wird dann die Aktualisierung auf die gleiche Weise ausgelöst, wie dies bei Nicht-Eintreten der zweiten Bedingung der Fall wäre, wenn also keine Zielführung aktiviert wäre. Dies kann deswegen vorteilhaft sein, weil die Wahrscheinlichkeit, dass der Nutzer des Navigationssystems abweichend von der geplanten Fahrtroute in die Region eintritt, bei Überschreiten der zweiten Begrenzungslinie ansteigt. Indem dann bereits eine Aktualisierung vorgenommen wird, wird für diesen Fall vorgesorgt.

Mit weiterem Vorteil kann bei Nicht-Eintreten der dritten Bedingung eine vierte Bedingung geprüft werden, ob die Position des Navigationssystems auf oder innerhalb der ersten Begrenzungslinie liegt. Tritt die vierte Bedingung ein, wird der Schritt des Aktualisierens der Kartendaten der Region ausgeführt. In diesem Fall ist der Nutzer des Navigationssystems von der geplanten Fahrtroute abgewichen, da die dritte Bedingung nicht eingetreten ist und die geplante Fahrtroute mithin nicht zumindest teilweise innerhalb der Region verläuft. Spätestens bei Überschreiten der ersten Begrenzungslinie, wenn sich also das Navigationssystem bereits in der Region befindet, ist eine Aktualisierung der Kartendaten der Region sinnvoll.

Weitere Ausführungsformen der Erfindung werden nachfolgend anhand beispielhafter Darstellungen erläutert. Es zeigen
- Fig. 1: eine schematische Darstellung einer in Regionen aufgeteilten digitalen Karte gemäß dem Stand der Technik;
- Fig. 2: eine schematische Darstellung einer Region einer digitalen Karte gemäß einer Ausführungsform der Erfindung;
- Fig. 3: eine schematische Darstellung einer Region einer digitalen Karte gemäß einer Ausführungsform der Erfindung mit verschiedenen Bewegungstrajektorien eines Navigationssystems gemäß einer Ausführungsform der Erfindung;
- Fig. 4: ein Ablaufdiagramm einer Ausführungsform des erfindungsgemäßen Verfahrens.

Gleiche Bezugszeichen kennzeichnen in den Figuren gleiche oder gleich wirkende Merkmale der dargestellten Ausführungsformen der Erfindung. Es wird darauf hingewiesen, dass es sich bei den dargestellten Figuren sowie der zugehörigen Beschreibung lediglich um Ausführungsbeispiele der Erfindung handelt. Insbesondere sind Darstellungen von Merkmalskombinationen in den Figuren und / oder der Figurenbeschreibung nicht dahingehend auszulegen, dass die Erfindung zwingend die Verwirklichung aller genannten Merkmale erfordert. Andere Ausführungsformen der Erfindung können weniger, mehr und / oder andere Merkmale enthalten. Der Schutzbereich und die Offenbarung der Erfindung ergeben sich aus den beiliegenden Patentansprüchen und der vollständigen Beschreibung. Es wird zudem darauf hingewiesen, dass es sich bei den Darstellungen um Prinzipdarstellungen von Ausführungsformen der Erfindung handelt. Die Anordnung der einzelnen dargestellten Elemente zueinander ist nur beispielhaft gewählt und kann bei anderen Ausführungsformen der Erfindung anders gewählt werden.

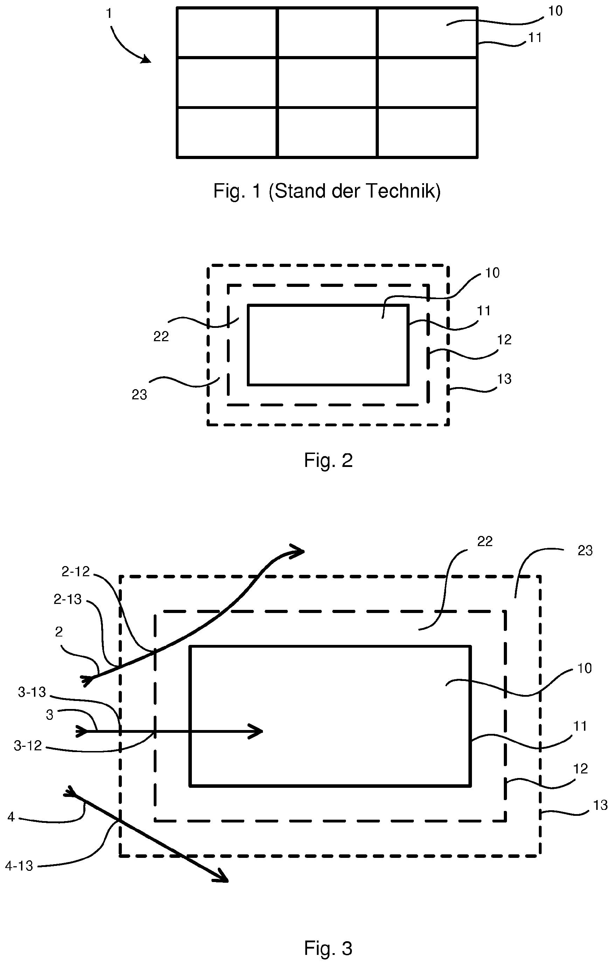

Fig. 1 zeigt eine im Stand der Technik bekannte digitale Karte 1. Der von der digitalen Karte 1 abgebildete geografische Bereich ist in aneinander angrenzende Regionen 10 aufgeteilt, bei denen es sich beispielsweise um einzelne Länder handeln kann. Aus Gründen der Übersichtlichkeit ist nur eine der Regionen 10 mit einem Bezugszeichen versehen. Die Regionen 10 sind in der schematischen Darstellung der Fig. 1 rechteckförmig gestaltet, dies ist jedoch keineswegs zwingend. Ebenso wenig ist es zwingend, dass die Regionen 10 die gleiche Größe haben. Jede Region 10 ist von einer ersten Begrenzungslinie 11 umgeben, welche den Rand der Region 10 bildet. Die Fläche der Region 10 liegt also innerhalb der ersten Begrenzungslinie 11.

Fig. 2 zeigt eine schematische Darstellung einer Region 10 einer digitalen Karte gemäß einer Ausführungsform der Erfindung. Bei der dargestellten Region 10 kann es sich um eine Region 10 der in Fig. 1 dargestellten digitalen Karte 1 handeln. Mit anderen Worten können sich weitere benachbarte Regionen 10 an die Fig. 2 gezeigte Region 10 anschließen, was aber in Fig. 2 aus Gründen der Übersichtlichkeit nicht dargestellt ist.

Die Region 10 weist eine erste Begrenzungslinie 11 auf. Zudem weist die Region 10 eine zweite Begrenzungslinie 12 auf, welche die Region 10 mit größerem Abstand umgibt als die erste Begrenzungslinie 11. In dem Bereich zwischen den Begrenzungslinien 11 und 12 liegt eine innere Pufferzone 22. Ferner weist die Region 10 eine dritte Begrenzungslinie 13 auf, welche die Region 10 mit größerem Abstand umgibt als die zweite Begrenzungslinie 12. In dem Bereich zwischen den Begrenzungslinien 12 und 13 liegt eine äußere Pufferzone 23. Die Region 10 ist also von zwei Pufferzonen 22, 23 umgeben.

Wie in Fig. 1 gezeigt, können mehrere Regionen 10 der digitalen Karte 1 unmittelbar aneinander angrenzen. Mit anderen Worten bildet die erste Begrenzungslinie 11 einer Region 10 teilweise auch die erste Begrenzungslinie 11 einer benachbarten Region 10. Anhand der Darstellung der Fig. 2 ergibt sich daraus, dass die durch die zweite 12 und dritte Begrenzungslinie 13 gebildeten Pufferzonen 22, 23 einer Region 10 innerhalb einer benachbarten Region 10 oder mehrerer benachbarter Regionen 10 liegen.

In Fig. 3 wird die Darstellung der in Fig. 2 gezeigten Region 10 der digitalen Karte 1 aufgenommen. Zudem sind drei beispielhafte Bewegungstrajektorien 2, 3, 4 eines Navigationssystems gemäß einer Ausführungsform der Erfindung dargestellt. Die Bewegungsrichtung der in Fig. 3 gezeigten Trajektorien 2, 3, 4 ist anhand von Pfeildarstellungen gekennzeichnet. Diese Bewegungsrichtung kann als zusätzliche Bedingung bei der Durchführung des Verfahrens geprüft werden. Dies ist jedoch nicht zwingend, weil sich die Notwendigkeit zur Aktualisierung der digitalen Karte 1 auch ohne explizite Prüfung der Bewegungsrichtung des mobilen Navigationssystems aus den weiteren Bedingungen ergibt.

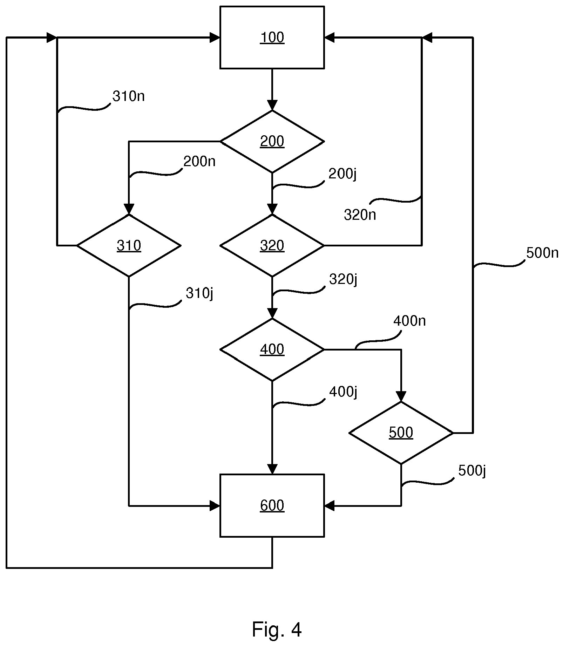

Anhand des in Fig. 4 gezeigten Ablaufdiagramms einer Ausführungsform der Erfindung soll nachfolgend für jede der Trajektorien 2, 3, 4 der Ablauf des Verfahrens erläutert werden.

### Beispiel 2a), Bewegungstrajektorie 2 ohne aktivierte Zielführung

Die Betrachtung der beispielhaften Bewegungstrajektorie 2 beginnt an deren in Fig. 3 dargestelltem Anfang, also außerhalb der äußeren Pufferzone 23 der Region 10. In Verfahrensschritt 100 wird die geografische Position des Navigationssystems bestimmt. In Schritt 200 wird geprüft, ob eine Zielführung des Navigationssystems aktiv ist. Dies ist nicht der Fall (Verzweigung 200n). In Schritt 310 wird die erste Bedingung geprüft, ob die Position des Navigationssystems auf oder innerhalb der zweiten Begrenzungslinie 12 liegt. Dies ist nicht der Fall (Verzweigung 310n), so dass das Verfahren endet. Im vorliegenden Beispiel ist eine fortlaufende Ausführung des Verfahrens vorgesehen, so dass gleich anschließend Schritt 100 ausgeführt wird.

Zu einem späteren Zeitpunkt erreicht das Navigationssystem auf seiner Bewegung entlang der Trajektorie 2 die dritte Begrenzungslinie 13 (Position 2-13). Wegen der in diesem Beispiel nicht aktivierten Zielführung hat dies jedoch keine Auswirkung.

Zu einem noch späteren Zeitpunkt erreicht das Navigationssystem auf seiner Bewegung entlang der Trajektorie 2 die zweite Begrenzungslinie 12 (Position 2-12). Wiederum wird die Position in Schritt 100 bestimmt und die Aktivierung der Zielführung geprüft (Schritt 200, Verzweigung 200n).

Die Prüfung 310 der ersten Bedingung, ob die Position 2-12 des Navigationssystems auf oder innerhalb der zweiten Begrenzungslinie 12 liegt, verläuft nunmehr positiv (Verzweigung 310j). Das Verfahren wird daher mit Schritt 600 fortgesetzt, bei dem die Kartendaten der Region 10 aktualisiert werden.

Die Bewegungstrajektorie 2 führt an der Region 10 vorbei, sodass eine Aktualisierung der Kartendaten der Region 10 im Ergebnis nicht erforderlich gewesen wäre. Dies ist jedoch im vorliegenden Beispiel aufgrund der nicht aktivierten Zielführung nicht absehbar gewesen. Das Erreichen der von der zweiten Begrenzungslinie 12 definierten inneren Pufferzone 22 stellt einen Indikator dar, dass sich das Navigationssystem mit hoher Wahrscheinlichkeit in die Region 10 hineinbewegen wird. Aus diesem Grund ist eine Aktualisierung der Kartendaten der Region 10 sinnvoll.

### Beispiel 2b), Bewegungstrajektorie 2 mit aktivierter Zielführung

Die Betrachtung der beispielhaften Bewegungstrajektorie 2 beginnt an deren in Fig. 3 dargestelltem Anfang, also außerhalb der Pufferzone 23 der Region 10. In Verfahrensschritt 100 wird die geografische Position des Navigationssystems bestimmt. In Schritt 200 wird geprüft, ob eine Zielführung des Navigationssystems aktiv ist. Dies ist der Fall (Verzweigung 200j). In Schritt 320 wird die erste Bedingung geprüft, ob die Position des Navigationssystems auf oder innerhalb der dritten Begrenzungslinie 13 liegt. Dies ist nicht der Fall (Verzeigung 320n), so dass das Verfahren endet. Im vorliegenden Beispiel ist eine fortlaufende Ausführung des Verfahrens vorgesehen, so dass gleich anschließend Schritt 100 ausgeführt wird.

Im Vergleich mit dem zuerst geschilderten Beispiel 2a) wird deutlich, dass die Prüfung 310, 320 der erste Bedingung bei aktivierter Zielführung bereits zu einem früheren Zeitpunkt vorgenommen wird. Dies ist deswegen sinnvoll, weil bei aktivierter Zielführung die Wahrscheinlichkeit einer Fahrt in die Region 10 hinein größer ist. Es kann aber zusätzlich der (wegen der aktivierten Zielführung bekannte) geplante weitere Verlauf der Bewegungstrajektorie wie nachfolgend ausgeführt berücksichtigt werden.

Zu einem späteren Zeitpunkt erreicht das Navigationssystem auf seiner Bewegung entlang der Trajektorie 2 die dritte Begrenzungslinie 13 (Position 2-13). Wiederum wird die Position in Schritt 100 bestimmt und die Aktivierung der Zielführung geprüft (Schritt 200, Verzweigung 200j). Die Prüfung 320 der ersten Bedingung, ob die Position 2-13 des Navigationssystems auf oder innerhalb der dritten Begrenzungslinie 13 liegt, verläuft nunmehr positiv (Verzweigung 320j).

Das Verfahren wird daher mit Schritt 400 fortgesetzt. Dabei wird die dritte Bedingung geprüft, ob die geplante Fahrtroute 2 zumindest teilweise innerhalb der Region 10 verläuft. Dies trifft nicht zu (Verzweigung 400n), sodass als nächstes in Schritt 500 die vierte Bedingung geprüft wird, ob die Position des Navigationssystems auf oder innerhalb der ersten Begrenzungslinie 11 liegt. Dies ist vorliegend nicht der Fall (Verzweigung 500n), so dass das Verfahren endet und mit Schritt 100 erneut begonnen wird.

Für den (in Fig. 3 nicht gezeigten) Fall, dass der Nutzer des Navigationssystems von der geplanten Trajektorie 2 abweicht und sich doch in die Region 10 hineinbewegt, würde bei Erreichen der ersten Begrenzungslinie 11 die Prüfung 500 der vierten Bedingung positiv verlaufen (Verzweigung 500j). Es würde dann eine Aktualisierung 600 der Kartendaten durchgeführt.

### Beispiel 3a), Bewegungstrajektorie 3 ohne aktivierte Zielführung

Zur Vermeidung von Wiederholungen soll nicht der gesamte Verfahrensablauf im Detail erneut geschildert werden. Es wird auf die Ausführungen zu den Beispielen 2a) und 2b) verwiesen.

Im Beispiel der Bewegungstrajektorie 3 erfolgt die Aktualisierung 600 der Kartendaten der Region 10 bei nicht aktivierter Zielführung bei Erreichen der Position 3-12. An diesem Punkt 3-12 durchläuft das Verfahren die Schritte und Zweige mit den folgenden Bezugszeichen: 100, 200, 200n, 310, 310j, 600.

### Beispiel 3b), Bewegungstrajektorie 3 mit aktivierter Zielführung

Zur Vermeidung von Wiederholungen soll nicht der gesamte Verfahrensablauf im Detail erneut geschildert werden. Es wird auf die Ausführungen zu den Beispielen 2a) und 2b) verwiesen.

Im Beispiel der Bewegungstrajektorie 3 erfolgt die Aktualisierung 600 der Kartendaten der Region 10 bei aktivierter Zielführung bei Erreichen der Position 3-13. An diesem Punkt durchläuft das Verfahren zunächst die bereits beschriebenen Schritte und Zweige mit den folgenden Bezugszeichen: 100, 200, 200j, 320, 320j.

Das Verfahren wird dann mit Schritt 400 fortgesetzt. Dabei wird die dritte Bedingung geprüft, ob die geplante Fahrtroute 3 zumindest teilweise innerhalb der Region 10 verläuft. Dies trifft zu (Verzweigung 400j), sodass als nächstes in Schritt 600 die Aktualisierung der Kartendaten erfolgt.

### Beispiel 4a), Bewegungstrajektorie 4 ohne aktivierte Zielführung

Zur Vermeidung von Wiederholungen soll nicht der gesamte Verfahrensablauf im Detail erneut geschildert werden. Es wird auf die Ausführungen zu den Beispielen 2a) bis 3b) verwiesen.

Im Beispiel der Bewegungstrajektorie 4 erfolgt bei nicht aktivierter Zielführung keine Aktualisierung 600 der Kartendaten der Region 10. Das Verfahren durchläuft wiederholt die Schritte und Zweige mit den folgenden Bezugszeichen: 100, 200, 200n, 310, 310n.

### Beispiel 4b), Bewegungstrajektorie 4 mit aktivierter Zielführung

Zur Vermeidung von Wiederholungen soll nicht der gesamte Verfahrensablauf im Detail erneut geschildert werden. Es wird auf die Ausführungen zu den Beispielen 2a) bis 3b) verwiesen.

Im Beispiel der Bewegungstrajektorie 4 erfolgt bei aktivierter Zielführung keine Aktualisierung 600 der Kartendaten der Region 10. Bis zum Erreichen der Position 4-13 durchläuft das Verfahren die bereits beschriebenen Schritte und Zweige mit den folgenden Bezugszeichen: 100, 200, 200j, 320, 320n.

Bei (und ab) Erreichen der Position 4-13 durchläuft das Verfahren die bereits beschriebenen Schritte und Zweige mit den folgenden Bezugszeichen: 100, 200, 200j, 320, 320j, 400, 400n, 500, 500n.

Für den (in Fig. 3 nicht gezeigten) Fall, dass der Nutzer des Navigationssystems von der geplanten Trajektorie 4 abweicht und sich doch in die Region 10 hineinbewegt, würde bei Erreichen der ersten Begrenzungslinie 11 die Prüfung 500 der vierten Bedingung positiv verlaufen (Verzweigung 500j). Es würde dann eine Aktualisierung 600 der Kartendaten durchgeführt.

### Liste der Bezugszeichen

- 1: Digitale Karte
- 10: Region der digitalen Karte
- 11: Begrenzungslinie der Region der digitalen Karte
- 12: Begrenzungslinie der inneren Pufferzone der Region der digitalen Karte
- 13: Begrenzungslinie der äußeren Pufferzone der Region der digitalen Karte
- 22: Innere Pufferzone der Region der digitalen Karte
- 23: Äußere Pufferzone der Region der digitalen Karte
- 2, 3, 4: Bewegungstrajektorien
- x-y: Schnittpunkt der Fahrttrajektorie x mit der Begrenzungslinie y
- 100 - 600: Verfahrensschritte

## Patentansprüche

1. Verfahren zur Aktualisierung einer digitalen Karte (1) eines mobilen Navigationssystems, insbesondere eines Navigationssystem eines Kraftfahrzeugs, wobei ein von der digitalen Karte (1) umfasster geografischer Bereich in eine Mehrzahl von Regionen (10) unterteilt ist, wobei jeweilige Kartendaten der digitalen Karte (1) je eine der Regionen (10) abbilden, wobei zumindest eine der Regionen (10) eine die Region (10) unmittelbar umgebende erste Begrenzungslinie (11) aufweist, wobei die Region (10) eine weitere Begrenzungslinie (12, 13) aufweist, welche die Region (10) wenigstens abschnittsweise mit größerem Abstand umgibt als die erste Begrenzungslinie (11), mit den Schritten
- Bestimmen (100) einer geografischen Position (2, 3, 4) des Navigationssystems,
- Prüfen (310, 320) einer ersten Bedingung, ob die Position (2-12, 3-12, 2-13, 3-13, 4-13) des Navigationssystems auf oder innerhalb der weiteren Begrenzungslinie (12, 13) liegt,
und, bei Eintreten (310j, 320j) der ersten Bedingung,
- Aktualisieren (600) der Kartendaten der Region (10).

2. Verfahren nach Anspruch 1 mit dem Schritt
- Bestimmen der weiteren Begrenzungslinie (12, 13), insbesondere in Abhängigkeit mindestens einer Eigenschaft einer mobilen Datenverbindung des Navigationssystems oder des Kraftfahrzeugs und / oder mindestens einer Eigenschaft des Navigationssystems oder des Kraftfahrzeugs.

3. Verfahren nach Anspruch 2, wobei die Bestimmung der weitere Begrenzungslinie (12, 13) derart erfolgt, dass die Aktualisierung (600) zum voraussichtlichen Zeitpunkt des Erreichens der ersten Begrenzungslinie (11) der Region (10) abgeschlossen ist.

4. Verfahren nach einem der vorhergehenden Ansprüche, wobei die Region (10) eine zweite Begrenzungslinie (12) aufweist, welche die Region (10) wenigstens abschnittsweise mit größerem Abstand umgibt als die erste Begrenzungslinie (11), wobei die Region (10) eine dritte Begrenzungslinie (13) aufweist, welche die Region (10) wenigstens abschnittsweise mit größerem Abstand umgibt als die zweite Begrenzungslinie (12), mit den Schritten
- Prüfen (200) einer zweiten Bedingung, ob eine Zielführung des Navigationssystems aktiv ist,
und, bei Eintreten (200j) der zweiten Bedingung,
- Prüfen (320) der ersten Bedingung, ob die Position (2-13, 3-13, 4-13) des Navigationssystems auf oder innerhalb der dritten Begrenzungslinie (13) liegt,
oder, bei Nicht-Eintreten (200n) der zweiten Bedingung,
- Prüfen (310) der ersten Bedingung, ob die Position (2-12, 3-12) des Navigationssystems auf oder innerhalb der zweiten Begrenzungslinie (12) liegt.

5. Verfahren nach Anspruch 4 mit den Schritten
bei Eintreten (200j) der zweiten Bedingung
- Prüfen (400) einer dritten Bedingung, ob eine geplante Fahrtroute zumindest teilweise innerhalb der Region (10) verläuft,
und, bei Eintreten (400j) der dritten Bedingung,
- Aktualisieren (600) der Kartendaten der Region (10).

6. Verfahren nach Anspruch 5 mit den Schritten
bei Nicht-Eintreten (400n) der dritten Bedingung
- Prüfen (500) einer vierten Bedingung, ob die Position des Navigationssystems auf oder innerhalb der ersten Begrenzungslinie (11) liegt,
und, bei Eintreten (500j) der vierten Bedingung,
- Aktualisieren (600) der Kartendaten der Region (10).

7. Mobiles Navigationssystem mit einer digitalen Karte (1), wobei ein von der digitalen Karte (1) umfasster geografischer Bereich in eine Mehrzahl von Regionen (10) unterteilt ist, wobei jeweilige Kartendaten der digitalen Karte (1) je eine der Regionen (10) abbilden, wobei zumindest eine der Regionen (10) eine die Region (10) unmittelbar umgebende erste Begrenzungslinie (11) aufweist, wobei die Region (10) eine weitere Begrenzungslinie (12, 13) aufweist, welche die Region (10) wenigstens abschnittsweise mit größerem Abstand umgibt als die erste Begrenzungslinie (11), wobei das Navigationssystem eingerichtet ist zur Durchführung der Verfahrensschritte nach einem der Ansprüche 1 bis 6.

8. Kraftfahrzeug mit einem Navigationssystem gemäß Anspruch 7.

## Claims

1. Method for updating a digital map (1) of a mobile navigation system, in particular of a navigation system of a motor vehicle, wherein a geographical area contained within the digital map (1) is divided into a multiplicity of regions (10), wherein respective map data of the digital map (1) each depict one of the regions (10), wherein at least one of the regions (10) has a first boundary line (11) directly surrounding the region (10), wherein the region (10) has a further boundary line (12, 13) that at least sectionally surrounds the region (10) at a greater distance than the first boundary line (11), having the steps
- determining (100) a geographical position (2, 3, 4) of the navigation system,
- checking (310, 320) a first condition as to whether the position (2-12, 3-12, 2-13, 3-13, 4-13) of the navigation system lies on or within the further boundary line (12, 13),
and, if the first condition is satisfied (310j, 320j),
- updating (600) the map data for the region (10).

2. Method according to Claim 1, having the step
- determining the further boundary line (12, 13), in particular depending on at least one property of a mobile data connection of the navigation system or of the motor vehicle and/or at least one property of the navigation system or of the motor vehicle.

3. Method according to Claim 2, wherein the further boundary line (12, 13) is determined such that the update (600) is concluded at the expected time of reaching the first boundary line (11) of the region (10) .

4. Method according to one of the preceding claims, wherein the region (10) has a second boundary line (12) that at least sectionally surrounds the region (10) at a greater distance than the first boundary line (11), wherein the region (10) has a third boundary line (13) that at least sectionally surrounds the region (10) at a greater distance than the second boundary line (12), having the steps
- checking (200) a second condition as to whether route guidance of the navigation system is active,
and, if the second condition is satisfied (200j),
- checking (320) the first condition as to whether the position (2-13, 3-13, 4-13) of the navigation system lies on or within the third boundary line (13),
or, if the second condition is not satisfied (200n),
- checking (310) the first condition as to whether the position (2-12, 3-12) of the navigation system lies on or within the second boundary line (12).

5. Method according to Claim 4, having the steps if the second condition is satisfied (200j)
- checking (400) a third condition as to whether a planned journey route runs at least partly within the region (10),
and, if the third condition is satisfied (400j),
- updating (600) the map data for the region (10).

6. Method according to Claim 5, having the steps if the third condition is not satisfied (400n)
- checking (500) a fourth condition as to whether the position of the navigation system lies on or within the first boundary line (11),
and, if the fourth condition is satisfied (500j),
- updating (600) the map data for the region (10).

7. Mobile navigation system having a digital map (1), wherein a geographical area contained within the digital map (1) is divided into a multiplicity of regions (10), wherein respective map data of the digital map (1) each depict one of the regions (10), wherein at least one of the regions (10) has a first boundary line (11) directly surrounding the region (10), wherein the region (10) has a further boundary line (12, 13) that at least sectionally surrounds the region (10) at a greater distance than the first boundary line (11), wherein the navigation system is configured so as to perform the method steps according to one of Claims 1 to 6.

8. Motor vehicle having a navigation system according to Claim 7.

## Revendications

1. Procédé de mise à jour d'une carte numérique (1) d'un système de navigation mobile, notamment d'un système de navigation d'un véhicule automobile, une zone géographique englobée par la carte numérique (1) étant subdivisée en une pluralité de régions (10), des données cartographiques respectives de la carte numérique (1) représentant respectivement l'une des régions (10), au moins l'une des régions (10) possédant une première ligne de délimitation (11) qui entoure directement la région (10), la région (10) possédant une ligne de délimitation supplémentaire (12, 13) qui entoure la région (10) au moins dans certaines portions avec un écart plus grand que la première ligne de délimitation (11), comprenant les étapes suivantes
- détermination (100) d'une position géographique (2, 3, 4) du système de navigation,
- vérification (310, 320) d'une première condition selon laquelle la position (2-12, 3-12, 2-13, 3-13, 4-13) du système de navigation se trouve sur ou à l'intérieur de la ligne de délimitation supplémentaire (12, 13),
et, lorsque la première condition se produit (310j, 320j),
- actualisation (600) des données cartographiques de la région (10).

2. Procédé selon la revendication 1, comprenant l'étape
- détermination de la ligne de délimitation supplémentaire (12, 13), notamment en fonction d'au moins une propriété d'une liaison de données mobile du système de navigation ou du véhicule automobile et/ou d'au moins une propriété du système de navigation ou du véhicule automobile.

3. Procédé selon la revendication 2, la détermination de la ligne de délimitation supplémentaire (12, 13) étant effectuée de telle sorte que l'actualisation (600) est achevée au moment probable d'atteindre la première ligne de délimitation (11) de la région (10).

4. Procédé selon l'une des revendications précédentes, la région (10) possédant une deuxième ligne de délimitation (12), laquelle entoure la région (10) au moins dans certaines portions avec un écart plus grand que la première ligne de délimitation (11), la région (10) possédant une troisième ligne de délimitation (13), laquelle entoure la région (10) au moins dans certaines portions avec un écart plus grand que la deuxième ligne de délimitation (12), comprenant les étapes suivantes :
- vérification (200) d'une deuxième condition selon laquelle un guidage vers la destination du système de navigation est actif,
et, lorsque la deuxième condition se produit (200j),
- vérification (320) de la première condition selon laquelle la position (2-13, 3-13, 4-13) du système de navigation se trouve sur ou à l'intérieur de la troisième ligne de délimitation (13),
ou, lorsque la deuxième condition ne se produit pas (200n),
- vérification (310) de la première condition selon laquelle la position (2-12, 3-12) du système de navigation se trouve sur ou à l'intérieur de la deuxième ligne de délimitation (12).

5. Procédé selon la revendication 4, comprenant les étapes suivantes
lorsque la deuxième condition se produit (200j),
- vérification (400) d'une troisième condition selon laquelle un itinéraire de déplacement planifié suit au moins partiellement un tracé à l'intérieur de la région (10),
et, lorsque la troisième condition se produit (400j),
- actualisation (600) des données cartographiques de la région (10).

6. Procédé selon la revendication 5, comprenant les étapes suivantes
lorsque la troisième condition ne se produit pas (400n),
- vérification (500) d'une quatrième condition selon laquelle la position du système de navigation se trouve sur ou à l'intérieur de la première ligne de délimitation (11),
et, lorsque la cinquième condition se produit (500j),
- actualisation (600) des données cartographiques de la région (10).

7. Système de navigation mobile comprenant une carte numérique (1), une zone géographique englobée par la carte numérique (1) étant subdivisée en une pluralité de régions (10), des données cartographiques respectives de la carte numérique (1) représentant respectivement l'une des régions (10), au moins l'une des régions (10) possédant une première ligne de délimitation (11) qui entoure directement la région (10), la région (10) possédant une ligne de délimitation supplémentaire (12, 13) qui entoure la région (10) au moins dans certaines portions avec un écart plus grand que la première ligne de délimitation (11), le système de navigation étant conçu pour exécuter les étapes du procédé selon l'une des revendications 1 à 6.

8. Véhicule automobile équipé d'un système de navigation selon la revendication 7.
